# EUROPEAN PATENT APPLICATION

(11) **EP 4 832 127 A1**
(43) Date of publication of application: **28.10.2026**
(21) Application number: 24921783.7
(22) Date of filing: 20.12.2024
(51) Int. Cl.: H01M 10/04

(54) **BATTERY WINDING APPARATUS, BATTERY PRODUCTION LINE AND CONTROL METHOD THEREFOR**

(30) Priority: 31.01.2024 CN 202410139051
(71) Applicant: Contemporary Amperex Technology Co., Limited, Ningde, Fujian 352100 (CN)
(72) Inventor: LI, Zhibin, Ningde, Fujian 352100 (CN); LIN, Wenfa, Ningde, Fujian 352100 (CN); KONG, Pan, Ningde, Fujian 352100 (CN); WEN, Yaoling, Ningde, Fujian 352100 (CN)
(74) Representative: Ziebig Hengelhaupt Intellectual Property Attorneys Patentanwaltskanzlei PartGmbB
(86) International application number: PCT/CN2024/141138
(87) International publication number: WO 2025/161761

(57) **Abstract**

A battery winding apparatus (1), a battery production line, and a control method therefor, which belong to the technical field of battery production. The battery winding apparatus includes: a support member (11); an alignment roller set (13), movably installed on the support member and used for aligning a plurality of composite electrode sheets (2); a winding needle (12), rotatably installed on the support member (11) and used for winding the plurality of composite electrode sheets (2); a feeding roller set (14), movably installed on the support member (11) between a standby station and a clamping station in a first direction, and configured to, when located at the clamping station, clamp a blank separator of one composite electrode sheet (2) between the winding needle (12) and the alignment roller set (13) and move in a second direction to adjust a distance between two composite electrode sheets (2); and a cutter assembly (15), movably installed on the support member (11) and used for cutting off the composite electrode sheets (2).

## Description

### CROSS-REFERENCE TO RELATED APPLICATIONS

The present application is based on and claims priority to Chinese Patent Application No.: 202410139051.6, filed on January 31, 2024, the entire disclosure of which is incorporated herein by reference.

### TECHNICAL FIELD

The present application relates to the field of battery technologies, and in particular, to a battery winding apparatus, a battery production line, and a control method therefor.

### BACKGROUND

A wound cell is formed by winding a positive electrode sheet coated with a positive electrode active substance, a negative electrode sheet coated with a negative electrode active substance, and two separators made of an insulating material in an overlapped state.

In a general battery winding device, an electrode sheet and a separator may be individually fed to facilitate adjustment of the position of a tab after a cell is wound. However, an adjustment procedure is relatively long, and single-machine production capacity is low. A composite winding device can first combine an electrode sheet and a separator and then perform winding, and this winding process eliminates the action of individually feeding the electrode sheet, which makes it difficult to individually adjust a tab edge distance of the electrode sheet, and causes technical problems of large deviation of a tab center distance and a high defect rate of the tab edge distance after the cell is wound.

### SUMMARY

The present application provides a battery winding apparatus, a battery production line, and a control method therefor, to resolve a technical problem that difficulty in adjusting a tab edge distance of a general battery winding apparatus causes low production efficiency and a high defect rate of the tab edge distance.

In a first aspect, an embodiment of the present application provides a battery winding apparatus, comprising:
a support member;
an alignment roller set, movably installed on the support member and used for aligning a plurality of composite electrode sheets;
a winding needle, rotatably installed on the support member, wherein the winding needle is used for winding the plurality of composite electrode sheets;
a feeding roller set, movably installed on the support member between a standby station and a clamping station in a first direction, wherein the feeding roller set is configured to, when located at the clamping station, clamp a blank separator of one composite electrode sheet between the winding needle and the alignment roller set and move in a second direction to adjust a distance between two composite electrode sheets; and
a cutter assembly, movably installed on the support member, wherein the cutter assembly is used for cutting off the composite electrode sheets.

In the foregoing technical solution, the feeding roller set is located at the standby station during winding, which does not affect winding work of the winding needle. In a finishing phase, the feeding roller set is moved to the clamping station to adjust the spacing between two composite electrode sheets by using the feeding roller set, so as to adjust a tab edge distance between a cathode and an anode after a cell is wound and formed, which has high adjustment efficiency and high accuracy, reduces deviation of a tab center distance of a composite winding cell, improves a yield rate, and speeds up project development progress.

In some embodiments, the cutter assembly is movably disposed between the standby station and a cutting station in the first direction, the feeding roller set and the cutter assembly are configured to synchronously move in the first direction, and in the case that the cutter assembly is located at the cutting station, the feeding roller set is located at the clamping station.

In the foregoing technical solution, by synchronously moving the cutter assembly and the feeding roller set, a drive mechanism and a control circuit can be reduced, assembly space of an apparatus can be optimized, and action efficiency can be improved.

In some embodiments, the battery winding apparatus further comprises:
a bracket, movably disposed on the support member in the first direction, wherein the cutter assembly and the feeding roller set are installed on the bracket; and
a first drive mechanism, power-coupled to the bracket and used for driving the bracket to move in the first direction.

In the foregoing technical solution, by providing the bracket to drive the cutter assembly and the feeding roller set to synchronously move, the structure is simple and easy to control.

In some embodiments, the battery winding apparatus further comprises:
a second drive mechanism, wherein the feeding roller set is slidably connected to the bracket in the second direction, and the second drive mechanism is power-coupled to the feeding roller set and used for driving the feeding roller set to slide in the second direction.

In the foregoing technical solution, the second drive mechanism is provided to drive the feeding roller set to slide on the bracket, so as to adjust the spacing between the composite electrode sheets.

In some embodiments, the second drive mechanism is configured to drive the feeding roller set to move in the second direction while the cutter assembly is located at the cutting station and moves in a direction of cutting the composite electrode sheets.

In the foregoing technical solution, the movement of the feeding roller set in the second direction is synchronized with the movement of the cutter assembly, so as to reduce the influence of action of the feeding roller set on single-machine production capacity, and improve production efficiency.

In some embodiments, the feeding roller set comprises two feeding rollers; and
the battery winding apparatus further comprises a third drive mechanism, the third drive mechanism is power-coupled to at least one of the two feeding rollers, and is used for driving the at least one of the two feeding rollers to move in a direction close to or away from each other.

In the foregoing technical solution, by providing the two feeding rollers and the third drive mechanism, the two feeding rollers are respectively located on two sides of the composite electrode sheet, and the third drive mechanism drives the two feeding rollers to clamp or release the composite electrode sheet located between the two feeding rollers.

In some embodiments, the alignment roller set comprises a first alignment roller and a second alignment roller; and
the battery winding apparatus further comprises a fourth drive mechanism, the fourth drive mechanism is power-coupled to at least one of the first alignment roller and the second alignment roller, and is used for driving the at least one of the first alignment roller and the second alignment roller to move in the direction close to or away from each other.

In the foregoing technical solution, the first alignment roller and the second alignment roller are provided to respectively support two composite electrode sheets, and the fourth drive mechanism drives at least one of the first alignment roller and the second alignment roller, so that the two composite electrode sheets are close to each other to be attached or away from each other to be separated.

In some embodiments, the fourth drive mechanism is configured to drive at least one of the first alignment roller and the second alignment roller to move in a direction away from each other before the feeding roller set moves from the standby station to the clamping station.

In the foregoing technical solution, the composite electrode sheets are first separated, and then the feeding roller set is controlled to move toward the clamping station, so that the feeding roller set clamps a single composite electrode sheet.

In some embodiments, the battery winding apparatus further comprises:
a main shaft, installed on the support member, wherein the feeding roller set is used for clamping, when located at the clamping station, a blank separator of a composite electrode sheet located on a side away from the main shaft.

In the foregoing technical solution, the blank separator of the composite electrode sheet on the side away from the main shaft is clamped, so that the feeding roller has sufficient adjustment space to facilitate action.

In some embodiments, the battery winding apparatus further comprises:
a pin, movably installed on the support member, wherein the pin is disposed between the main shaft and the alignment roller set, and the pin is configured to clamp the plurality of composite electrode sheets before the cutter assembly cuts the composite electrode sheets.

In the foregoing technical solution, the pin is provided to clamp the composite electrode sheets before the cutter assembly cuts the composite electrode sheets, which facilitates cutting.

In a second aspect, an embodiment of the present application provides a battery production line, comprising: the battery winding apparatus according to any of the foregoing technical solutions; and a feeding mechanism, used for conveying the composite electrode sheets to the battery winding apparatus.

In the foregoing technical solution, the battery production line improves the battery winding apparatus, and in the finishing phase, the feeding roller set is used to adjust the spacing between two composite electrode sheets to adjust a tab edge distance between a cathode and an anode after a cell is wound and formed, which has high adjustment efficiency and high accuracy, reduces deviation of a tab center distance of a composite winding cell, improves a yield rate, and speeds up project development progress.

In a third aspect, an embodiment of the present application provides a control method for the battery winding apparatus according to any of the foregoing technical solutions. The control method comprises:
in the case that the winding needle stops rotating, controlling the feeding roller set to move in the first direction to the clamping station, and controlling the feeding roller set to clamp one composite electrode sheet;
controlling the cutter assembly to move in the direction of cutting the composite electrode sheets, and controlling the feeding roller set to move by a target distance in the second direction to pull the clamped composite electrode sheet; and
controlling the cutter assembly to cut off the composite electrode sheets.

In the foregoing technical solution, the feeding roller set is located at the standby station during winding, which does not affect winding work of the winding needle. In a finishing phase, the feeding roller set is moved to the clamping station to adjust the spacing between two composite electrode sheets by using the feeding roller set, so as to adjust a tab edge distance between a cathode and an anode after a cell is wound and formed, which has high adjustment efficiency and high accuracy, reduces deviation of a tab center distance of a composite winding cell, improves a yield rate, and speeds up project development progress.

In some embodiments, before the controlling the feeding roller set to clamp one composite electrode sheet, the control method further comprises:
controlling the alignment roller set to separate the plurality of composite electrode sheets; and
before the controlling the cutter assembly to cut off the composite electrode sheets, the control method further comprises:
   controlling the alignment roller set to align the plurality of composite electrode sheets.

In the foregoing technical solution, the plurality of composite electrode sheets are controlled to be separated, so that the feeding roller set clamps a single composite electrode sheet, and the plurality of electrode sheets are aligned, so that the cutter assembly cuts off the plurality of composite electrode sheets.

In some embodiments, the controlling the feeding roller set to move in the first direction to the clamping station comprises:
controlling the feeding roller set and the cutter assembly to synchronously move in the first direction until the feeding roller set is located at the clamping station and the cutter assembly is located at the cutting station.

In the foregoing technical solution, by synchronously moving the cutter assembly and the feeding roller set, a drive mechanism and a control circuit can be reduced, assembly space of an apparatus can be optimized, and action efficiency can be improved.

In some embodiments, before the controlling the feeding roller set to move by a target distance in the second direction, the control method further comprises:
obtaining a correction distance of a tab of one of the plurality of composite electrode sheets; and
determining the target distance based on the correction distance.

In the foregoing technical solution, the movement distance of the feeding roller set is determined by obtaining the correction distance of the tab, so that correction of the position of the tab is more accurate to improve product yield.

### BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic diagram 1 of a partial structure of a battery winding apparatus according to some embodiments of the present application;
FIG. 2 is a schematic diagram 2 of a partial structure of a battery winding apparatus according to some embodiments of the present application;
FIG. 3 is a schematic diagram 3 of a partial structure of a battery winding apparatus according to some embodiments of the present application;
FIG. 4 is a schematic diagram 4 of a partial structure of a battery winding apparatus according to some embodiments of the present application;
FIG. 5 is a schematic flow diagram of a control method for a battery winding apparatus according to some embodiments of the present application; and
FIG. 6 is a schematic diagram of adjustment positions of a feeding roller set according to some embodiments of the present application.

### Reference numerals:

battery winding apparatus 1; support member 11, winding needle 12; alignment roller set 13; first alignment roller 131; second alignment roller 132; feeding roller set 14; feeding roller 141; cutter assembly 15; bracket 16; main shaft 17; pin 18; and
composite electrode sheet 2.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. Those skilled in the art explicitly and implicitly understand that the described embodiments in the present application may be combined with another embodiment.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the present application, "plurality" means two or more than two (including two). Similarly, "a plurality of groups" means two or more than two groups, and "a plurality of pieces" means two or more than two pieces.

In recent years, new energy vehicles have been developed with a great leap. In the field of electric vehicles, power batteries play an irreplaceably important role as a power source of the electric vehicle. A battery is composed of a box body and a plurality of battery cells accommodated in the box body. As a core component of new energy vehicles, the battery has relatively high requirements in terms of both safety and cycle life.

During production of a general power battery, a cell of the battery may be produced and processed by winding or stacking. A wound cell is formed by winding a positive electrode sheet coated with a positive electrode active substance, a negative electrode sheet coated with a negative electrode active substance, and two separators made of an insulating material in an overlapped state. Because the production process is relatively simple, the yield rate is relatively high, and application is relatively wide.

In a general battery winding device, an electrode sheet and a separator may be individually fed to facilitate adjustment of the position of a tab after a cell is wound. However, an adjustment procedure is relatively long, and single-machine production capacity is low. A composite winding device can first combine an electrode sheet and a separator and then perform winding, and this winding process eliminates the action of individually feeding the electrode sheet, which makes it difficult to individually adjust a tab edge distance of the electrode sheet, and causes technical problems of large deviation of a tab center distance and a high defect rate of the tab edge distance after the cell is wound.

Based on the foregoing considerations, to resolve the technical problems of low production efficiency and a high defect rate of the tab edge distance caused by the difficulty in adjusting the tab edge distance of a general battery winding apparatus, the present application designs a battery winding apparatus, including a support member, a winding needle, an alignment roller set, a feeding roller set, and a cutter assembly. The winding needle is rotatably installed on the support member, and the winding needle is used for winding a plurality of composite electrode sheets; the alignment roller set is movably installed on the support member; the feeding roller set is movably installed on the support member between a standby station and a clamping station in a first direction, and the feeding roller set is configured to, when located at the clamping station, clamp a blank separator of one composite electrode sheet between the winding needle and the alignment roller set and move in a second direction to adjust a distance between two composite electrode sheets; and the cutter assembly is movably installed on the support member, and the cutter assembly is used for cutting off the composite electrode sheets.

In the battery winding apparatus with this structure, the feeding roller set is located at the standby station during winding of the composite electrode sheet, which does not affect winding work of the winding needle. In a finishing phase, the feeding roller set is moved to the clamping station to adjust the spacing between two composite electrode sheets by using the feeding roller set, so as to adjust a tab edge distance between a cathode and an anode after a cell is wound and formed, which has high adjustment efficiency and high accuracy, reduces deviation of a tab center distance of a composite winding cell, improves a yield rate, and speeds up project development progress.

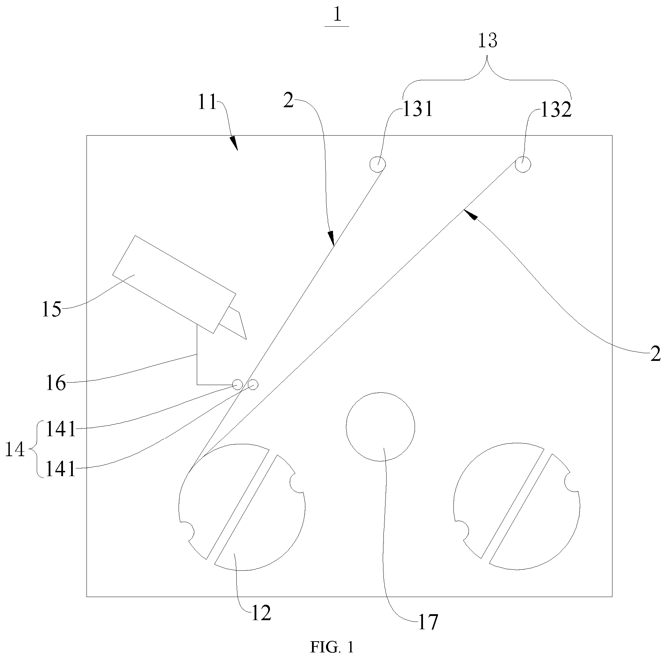

According to some embodiments of the present application, reference is made to FIG. 1 to FIG. 4. The present application provides a battery winding apparatus 1. The battery winding apparatus 1 includes a support member 11, a winding needle 12, an alignment roller set 13, a feeding roller set 14, and a cutter assembly 15.

In this implementation, the support member 11 may include a machine base and a support plate, the support plate may be installed on the machine base in a vertical direction, and the support plate may be used for separating a winding station and a portion of a drive mechanism. For ease of understanding of the solution, the subsequent description will be elaborated based on the support member 11 being a support plate.

The winding needle 12 is rotatably installed on the support member 11, and the winding needle 12 is used for winding a plurality of composite electrode sheets 2. The winding needle 12 is disposed in a direction perpendicular to the support plate and is rotatably installed on the support member 11 around its own axial line, and the winding needle 12 is used to clamp the plurality of composite electrode sheets 2 and is rotated around its own axial line, so as to wind the plurality of composite electrode sheets 2 into a cell.

The composite electrode sheet 2 is conveyed to the battery winding apparatus by a feeding mechanism (not shown in the figure), the composite electrode sheet 2 conveyed by the feeding mechanism includes a separator and a plurality of electrode sheets, a plurality of electrode sheets on the same separator are spaced apart from each other, the electrode sheet is combined with a portion of the separator, and there is a blank separator of an uncombined electrode sheet between two adjacent electrode sheets on the same separator.

It should be noted that the quantity of composite electrode sheets 2 is not limited herein, and the plurality of composite electrode sheets 2 in the embodiments of the present application at least include one positive composite electrode sheet and one negative composite electrode sheet, the positive composite electrode sheet includes a positive electrode sheet and an insulating separator, and the negative composite electrode sheet includes a negative electrode sheet and an insulating separator.

The alignment roller set 13 may include a plurality of rollers, each roller or a plurality of rollers therein are used for support or tensioning one composite electrode sheet 2, each roller in the alignment roller set 13 is cylindrical and rotatably installed on the support member 11 along a central axis, and a material object conveyed by the alignment roller set 13 is the plurality of composite electrode sheets 2. The alignment roller set 13 may be movably installed on the support member 11, that is, each roller in the alignment roller set 13 may have other degrees of freedom in addition to the rotational degree of freedom around its own central axis. The alignment roller set 13 is used for aligning the plurality of composite electrode sheets 2. It may be understood that the alignment roller set 13 is disposed on a side of the winding needle 12 close to the feeding mechanism. That is, on a transmission path of the electrode sheet, the alignment roller set 13 is located upstream of the winding needle, the composite electrode sheet first passes through the alignment roller set 13, the alignment roller set 13 aligns the plurality of composite electrode sheets 2, and then the winding needle 12 is controlled to wind the plurality of composite electrode sheets 2 together.

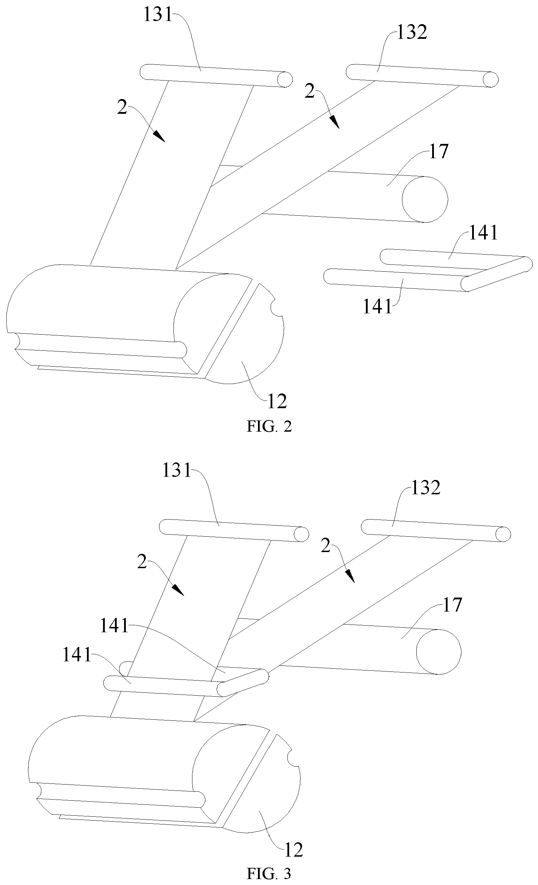

As shown in FIG. 2 and FIG. 3, FIG. 2 is a schematic diagram of a structure of the feeding roller set 14 at a standby station, and FIG. 3 is a schematic diagram of a structure of the feeding roller set 14 at a clamping station. The feeding roller set 14 may include a plurality of rollers, each roller in the feeding roller set 14 is a cylinder that is rotatable around its own central axis, and the feeding roller set 14 can clamp the blank separator in the composite electrode sheet 2 at the clamping station. In this way, the plurality of composite electrode sheets 2 aligned by the alignment roller set 13 can be separated, and an alignment position of the clamped composite electrode sheet 2 and another composite electrode sheet 2 in a length direction, that is, a feeding position of the composite electrode sheet 2, can be adjusted.

The feeding roller set 14 is movably installed on the support member 11 between a standby station and a clamping station in the first direction, the standby station and the clamping station are two working positions of the feeding roller set 14. At the standby station, the feeding roller set 14 is not in contact with the composite electrode sheet to reduce the risk of interfering with winding of the winding needle, and at the clamping station, the feeding roller set 14 clamps a blank separator of one composite electrode sheet. The feeding roller set 14 is configured to, when located at the clamping station, clamp a blank separator of one composite electrode sheet 2 between the winding needle 12 and the alignment roller set 13 and move in a second direction to adjust a distance between two composite electrode sheets 2.

In this implementation, a direction perpendicular to the support member 11 is used as the first direction, and the second direction is disposed parallel to the support member 11. During winding, the composite electrode sheet 2 acts in a direction parallel to the support member 11. By providing the feeding roller set 14 to move in the first direction, during winding of the composite electrode sheet 2, the feeding roller set 14 is stationary at the standby station, the standby station is spaced apart from the support member 11, and the feeding roller set 14 is misaligned with the composite electrode sheet 2 in the case of being located at the standby station, to avoid the winding needle 12 and the composite electrode sheet 2.

In the finishing phase of winding, the winding needle 12 stops rotating around its own axial line, the plurality of composite electrode sheets 2 are separated, the feeding roller set 14 can move in the first direction to the clamping station, and the feeding roller set 14 clamps one composite electrode sheet 2 when located at the clamping station, specifically clamps a blank separator of the composite electrode sheet 2 between the winding needle 12 and the alignment roller set 13. The feeding roller set 14 moves in the second direction to pull the composite electrode sheet 2 clamped by the feeding roller set 14, so that an alignment position of the clamped composite electrode sheet 2 and another composite electrode sheet 2 in the length direction can be adjusted, thereby changing a feeding position of the composite electrode sheet 2 to adjust a tab spacing of a wound cell.

The cutter assembly 15 is movably installed on the support member 11, and the cutter assembly 15 is used for cutting off the composite electrode sheets 2. In this implementation, the cutter assembly 15 is movably disposed in the direction parallel to the support member 11, so that the cutter assembly 15 cuts off the composite electrode sheets 2 after the feeding roller set 14 has adjusted the position of the composite electrode sheets 2, so as to facilitate the winding needle 12 to complete finishing.

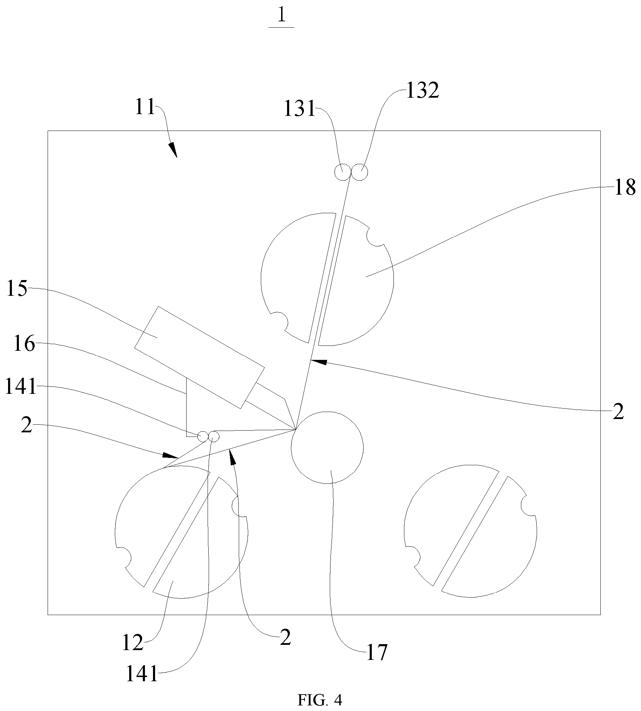

In actual execution, as shown in FIG. 1, in the finishing phase of winding the composite electrode sheet 2, the winding needle 12 needs to be controlled to stop rotating and cut off the composite electrode sheets 2 to facilitate finishing. Before the cutter assembly 15 cuts off the composite electrode sheets 2, the alignment roller set 13 is separated to separate the plurality of composite electrode sheets 2 from each other under traction, as shown in FIG. 4. By moving the feeding roller set 14 to the clamping station and clamping one composite electrode sheet 2 and driving the composite electrode sheet 2 to move in the second direction, it is equivalent to adjusting a position that is of the composite electrode sheet and that is cut by the cutter assembly 15, thereby changing a feeding position of a composite electrode sheet 2 corresponding to a next cell. A moving distance of the feeding roller set 14 is accurately controlled by sensing the position of the tab to correctly adjust the feeding position of the composite electrode sheet 2, so that after the next cell is wound, deviation between tab center distances of a positive electrode and a negative electrode is small, and a yield rate of the tab edge distance is improved.

According to the battery winding apparatus 1 in the embodiment of the present application, the feeding roller set 14 is located at the standby station during winding, which does not affect winding work of the winding needle 12. In the finishing phase, the feeding roller set 14 is moved to the clamping station to adjust the spacing between two composite electrode sheets 2 by using the feeding roller set 14, so as to adjust a tab edge distance between a cathode and an anode after a cell is wound and formed, which has high adjustment efficiency and high accuracy, reduces deviation of a tab center distance of a composite winding cell, improves a yield rate, and speeds up project development progress.

According to some embodiments of the present application, the cutter assembly 15 may be movably disposed between the standby station and the cutting station in the first direction, the standby station and the cutting station are two working positions of the cutter assembly 15. At the standby station, the cutter assembly 15 is not in contact with the composite electrode sheet to reduce the risk of interfering with winding of the winding needle, and at the cutting station, the cutter assembly 15 cuts off the composite electrode sheet. The feeding roller set 14 and the cutter assembly 15 are configured to be synchronously movable in the first direction, and in the case that the cutter assembly 15 is located at the cutting station, the feeding roller set 14 is located at the clamping station.

The cutter assembly 15 may also be movable in the first direction, and during winding, the cutter assembly 15 is located at the standby station spaced apart from the support member 11. It may be understood that the cutter assembly 15 is misaligned with the composite electrode sheet 2 in the case of being located at the standby station. In the finishing phase, the cutter assembly 15 can move close to the support member 11 in the first direction to the cutting station to face the separator of the composite electrode sheet 2.

In this implementation, the feeding roller set 14 and the cutter assembly 15 are configured to be synchronously movable in the first direction, so that in the finishing phase, the feeding roller set 14 and the cutter assembly 15 synchronously move close to the support member 11 in the first direction, and in the case that the cutter assembly 15 is located at the cutting station, the feeding roller set 14 can be synchronously located at the clamping station, so as to avoid individually controlling the feeding roller set 14 and the cutter assembly 15 to move, reduce control working procedure, and improve production efficiency.

According to the embodiments of the present application, by synchronously moving the cutter assembly 15 and the feeding roller set 14, a drive mechanism and a control circuit can be reduced, assembly space of an apparatus can be optimized, and action efficiency can be improved.

As shown in FIG. 1 and FIG. 4, according to some embodiments of the present application, the battery winding apparatus 1 may further include a bracket 16 and a first drive mechanism, the bracket 16 may be movably disposed on the support member 11 in the first direction, and the cutter assembly 15 and the feeding roller set 14 may be installed on the bracket 16; and the first drive mechanism may be power-coupled to the bracket 16 and used for driving the bracket 16 to move in the first direction.

In this implementation, the first drive mechanism may also be installed on the support member 11, and the first drive mechanism drives the bracket 16 to move in a direction close to and away from the support member 11 in the first direction, so as to drive the cutter assembly 15 and the feeding roller set 14 to synchronously move in the first direction. By providing the bracket 16, only one drive mechanism is required to drive the cutter assembly 15 and the feeding roller set 14 to move. The first drive mechanism may be a linear motion module, a drive cylinder, or the like, and a specific form is not limited herein.

According to the embodiment of the present application, the bracket 16 and the first drive mechanism are provided to drive the cutter assembly 15 and the feeding roller set 14 to synchronously move, and the structure is simple and easy to control.

According to some embodiments of the present application, the battery winding apparatus 1 may further include a second drive mechanism, the feeding roller set 14 may be slidably connected to the bracket 16 in the second direction, and the second drive mechanism may be power-coupled to the feeding roller set 14 and used for driving the feeding roller set 14 to slide in the second direction.

In this implementation, the second drive mechanism may be installed on the bracket 16, and the second drive mechanism is power-coupled to the feeding roller set 14, so that the second drive mechanism can drive the feeding roller set 14 to move in the second direction on the bracket 16, where the second drive mechanism may be a linear motion module to control a movement distance of the feeding roller set 14 in the second direction, thereby facilitating accurate adjustment of the tab edge distance.

According to the embodiment of the present application, the second drive mechanism is provided to drive the feeding roller set 14 to slide on the bracket 16, so as to adjust the spacing between the composite electrode sheets 2.

As shown in FIG. 1 and FIG. 4, according to some embodiments of the present application, the second drive mechanism may be configured to drive the feeding roller set 14 to move in the second direction while the cutter assembly 15 is located at the cutting station and moves in a direction of cutting the composite electrode sheets 2.

In this implementation, to reduce the influence of adjustment action of the feeding roller set 14 on single-machine production capacity, while the cutter assembly 15 is located at the cutting station and moves in the direction of cutting the composite electrode sheets 2, the feeding roller set 14 is driven to perform a synchronous action to adjust the position of the composite electrode sheets 2. It may be understood that the adjustment action of the feeding roller set 14 may be completed before the cutter assembly 15 cuts off the composite electrode sheets 2 because the stroke is generally not large, and the influence on single-machine production capacity is reduced while the tab edge distance is adjusted.

According to the embodiment of the present application, the movement of the feeding roller set 14 in the second direction is synchronized with the movement of the cutter assembly 15, so as to reduce the influence of action of the feeding roller set 14 on single-machine production capacity, and improve production efficiency.

As shown in FIG. 1 to FIG. 4, according to some embodiments of the present application, the feeding roller set 14 may include two feeding rollers 141, the battery winding apparatus 1 may further include a third drive mechanism, the third drive mechanism is power-coupled to at least one of the two feeding rollers 141, and is used for driving the at least one of the two feeding rollers 141 to move in a direction close to or away from each other.

To enable the feeding roller set 14 to effectively clamp the composite electrode sheet 2, the feeding roller set 14 may include two feeding rollers 141. In the case that the feeding roller set 14 is located at the standby station, the two feeding rollers 141 are separated, so that when the two feeding rollers 141 move from the standby station to the clamping station, the two feeding rollers 141 may be located on two sides of a corresponding composite electrode sheet 2 in the second direction.

In this implementation, the third drive mechanism may alternatively be installed on the bracket 16, the third drive mechanism may be power-coupled to at least one of the two feeding rollers 141, and in the case that the two feeding rollers 141 are located at the clamping station, the third drive mechanism can drive the at least one of the two feeding rollers 141 to move in the direction close to each other, so that the two feeding rollers 141 are clamped on two side surfaces of the composite electrode sheet 2 in the second direction, which is convenient for the feeding roller set 14 to stably drive the composite electrode sheet 2 to move.

In an example, the third drive mechanism may be separately power-coupled to the two feeding rollers 141 to drive the two feeding rollers 141 to simultaneously move; and in another example, the third drive mechanism may alternatively be power-coupled to one of the two feeding rollers 141 to individually drive the feeding roller 141 to move. A specific manner is not limited herein.

According to the embodiment of the present application, by providing the two feeding rollers 141 and the third drive mechanism, the two feeding rollers 141 are respectively located on two sides of the composite electrode sheet 2, and the third drive mechanism drives the two feeding rollers 141 to clamp or release the composite electrode sheet 2 located between the two feeding rollers 141.

As shown in FIG. 1 to FIG. 4, according to some embodiments of the present application, the alignment roller set 13 may include a first alignment roller 131 and a second alignment roller 132. The battery winding apparatus 1 may further include a fourth drive mechanism, the fourth drive mechanism may be power-coupled to at least one of the first alignment roller 131 and the second alignment roller 132, and is used for driving the at least one of the first alignment roller 131 and the second alignment roller 132 to move in a direction close to or away from each other.

The alignment roller set 13 may include the first alignment roller 131 and the second alignment roller 132 that are respectively used for supporting two different composite electrode sheets 2. The fourth drive mechanism may be installed on the support member 11, and the first alignment roller 131 and the second alignment roller 132 are driven by the fourth drive mechanism to move in the direction close to or away from each other, thereby driving two composite electrode sheets 2 to be close to each other and aligned and to be away from each other and separated.

In this implementation, to facilitate the feeding roller set 14 to accurately clamp a corresponding composite electrode sheet 2, the first alignment roller 131 and the second alignment roller 132 may be arranged in the second direction, and the fourth drive mechanism can drive the first alignment roller 131 and the second alignment roller 132 to move in the second direction, so that when the first alignment roller 131 and the second alignment roller 132 move in a direction away from each other, two composite electrode sheets 2 are separated in the second direction, which is convenient for the two feeding rollers 141 of the feeding roller set 14 to be clamped on two sides of the corresponding composite electrode sheet 2 in the second direction.

In an example, the fourth drive mechanism may be separately power-coupled to the first alignment roller 131 and the second alignment roller 132 to drive the first alignment roller 131 and the second alignment roller 132 to simultaneously move; in another example, the third drive mechanism may alternatively be power-coupled to the first alignment roller 131 to individually drive the first alignment roller 131 to move; and in still another example, the third drive mechanism may alternatively be power-coupled to the second alignment roller 132 to individually drive the second alignment roller 132 to move. A specific manner is not limited herein.

It should be noted that polarities of composite electrode sheets 2 respectively supported by the first alignment roller 131 and the second alignment roller 132 are not limited herein, and are determined according to an order of incoming materials in front, so that the first alignment roller 131 can support a positive composite electrode sheet 2 or a negative composite electrode sheet 2, and the second alignment roller 132 can support a positive composite electrode sheet 2 or a negative composite electrode sheet 2. Correspondingly, a polarity of a composite electrode sheet 2 clamped by the feeding roller set 14 is also not limited herein, and is determined according to the order of incoming materials in front. A positive composite electrode sheet 2 may be clamped to adjust the position of a positive tab, or a negative composite electrode sheet 2 may be clamped to adjust the position of a negative tab.

According to the embodiment of the present application, the first alignment roller 131 and the second alignment roller 132 are provided to respectively support two composite electrode sheets 2, and the fourth drive mechanism drives at least one of the first alignment roller 131 and the second alignment roller 132, so that the two composite electrode sheets 2 are close to each other to be attached or away from each other to be separated.

According to some embodiments of the present application, the fourth drive mechanism may be configured to drive at least one of the first alignment roller 131 and the second alignment roller 132 to move in the direction away from each other before the feeding roller set 14 moves from the standby station to the clamping station.

In this implementation, to enable that the feeding roller set 14 can accurately clamp a corresponding composite electrode sheet 2, the fourth drive mechanism needs to drive the first alignment roller 131 and the second alignment roller 132 to move in the direction away from each other before the feeding roller set 14 moves from the standby station to the clamping station, so that the composite electrode sheets 2 are separated and spaced apart by a certain distance, which facilitates insertion of one feeding roller 141 between two composite electrode sheets 2.

According to the embodiment of the present application, the composite electrode sheets 2 are first separated, and then the feeding roller set 14 is controlled to move toward the clamping station, so that the feeding roller set 14 clamps a single composite electrode sheet 2.

As shown in FIG. 1 to FIG. 4, according to some embodiments of the present application, the battery winding apparatus 1 may further include a main shaft 17 installed on the support member 11. The feeding roller set 14 is used for clamping, when located at the clamping station, a blank separator of a composite electrode sheet 2 located on a side away from the main shaft 17.

In this implementation, the main shaft 17 is installed on the support member 11 in the first direction, the winding needle 12 is spaced apart from the main shaft 17, and the winding needle 12 can rotate around its own axial line and can also revolve around the main shaft 17 with an axial line of the main shaft 17 as an axis. For example, the alignment roller set 13 may be located on the upper side of the main shaft 17, and in the finishing phase, the winding needle 12 may be located on the left side of the main shaft 17, so that two composite electrode sheets 2 between the winding needle 12 and the alignment roller set 13 can be separated respectively in a direction close to the main shaft 17 and in a direction away from the main shaft 17.

In the finishing phase, in the case that the feeding roller 141 is located at the clamping station, the feeding roller 141 can clamp a blank separator of a composite electrode sheet 2 located on a side away from the main shaft 17, and can drive the composite electrode sheet 2 to move away from the main shaft 17 in the second direction. By clamping the composite electrode sheet 2 on a side away from the main shaft 17, movable space of the feeding roller 141 is larger, and it is less likely to interfere with other devices on the apparatus, such as the main shaft 17, which facilitates adjustment of the length of the composite electrode sheet 2.

According to the embodiment of the present application, the blank separator of the composite electrode sheet 2 on a side away from the main shaft 17 is clamped, so that the feeding roller 141 has sufficient adjustment space to facilitate action.

As shown in FIG. 4, according to some embodiments of the present application, the battery winding apparatus 1 may further include a pin 18; and the pin 18 is movably installed on the support member 11, the pin 18 may be disposed between the main shaft 17 and the alignment roller set 13, and the pin 18 may be configured to clamp the plurality of composite electrode sheets 2 before the cutter assembly 15 cuts the composite electrode sheets 2.

In this implementation, the pin 18 is movably installed on the support member 11 in the first direction, where the pin 18 may be disposed between the main shaft 17 and the alignment roller. Before the cutter assembly 15 cuts the composite electrode sheets 2, the alignment roller set 13 aligns the plurality of composite electrode sheets 2, so that the cutter assembly 15 simultaneously cuts off the plurality of composite electrode sheets 2. The pin 18 is used to clamp a portion that is of the composite electrode sheet 2 and that is located between the main shaft 17 and the alignment roller set 13, so that the position of the composite electrode sheet 2 remains fixed, which facilitates the cutter assembly 15 to cut the composite electrode sheet 2.

It should be noted that, when cutting the composite electrode sheet 2, the cutter assembly 15 moves in a direction close to the main shaft 17, and cuts a portion that is of the composite electrode sheet 2 and that is located between the pin 18 and the winding needle 12.

It should be further noted that, after the pin 18 clamps the plurality of composite electrode sheets 2 and before the cutter assembly 15 cuts the plurality of composite electrode sheets 2, the third drive mechanism may be controlled to control the two feeding rollers 141 to separate in the direction away from each other, so as to release the composite electrode sheets 2 clamped by the two feeding rollers.

According to the embodiment of the present application, the pin 18 is provided to clamp the composite electrode sheets 2 before the cutter assembly 15 cuts the composite electrode sheets 2, which facilitates cutting.

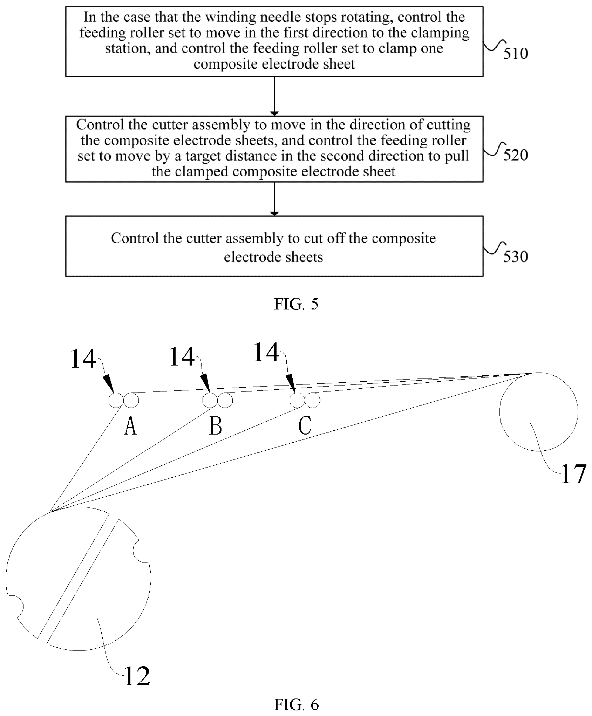

As shown in FIG. 5, according to some embodiments of the present application, another aspect of the present application further provides a control method for the battery winding apparatus 1 according to any of the foregoing technical solutions. The control method includes: Steps 610, 620, and 630.

In step 510, in the case that the winding needle 12 stops rotating, the feeding roller set 14 is controlled to move in the first direction to the clamping station, and the feeding roller set 14 is controlled to clamp one composite electrode sheet 2;
in step 520, the cutter assembly 15 is controlled to move in the direction of cutting the composite electrode sheets 2, and the feeding roller set 14 is controlled to move by a target distance in the second direction to pull the clamped composite electrode sheet 2; and
in step 530, the cutter assembly 15 is controlled to cut off the composite electrode sheets 2.

In the case that winding enters a finishing phase, the winding needle 12 stops rotating, and in the case that the winding needle 12 stops rotating, the first drive mechanism is controlled to drive the feeding roller set 14 to move to the clamping station in the first direction, and the third drive mechanism is used to drive the feeding roller set 14 to clamp a composite electrode sheet 2 located on a side away from the main shaft 17.

The cutter assembly 15 is controlled to move in the direction of cutting the composite electrode sheets 2, and the second drive mechanism is controlled to drive the feeding roller set 14 to move by a target distance in the second direction to pull the clamped composite electrode sheet 2, thereby adjusting the position of a tab of the composite electrode sheet 2.

After the feeding roller set 14 has adjusted the position of the composite electrode sheet 2, the cutter assembly 15 is controlled to cut off the composite electrode sheets 2, so that the winding needle 12 subsequently winds remaining composite electrode sheets 2 to complete finishing.

The cutter assembly 15 may be controlled to move in the direction of cutting the composite electrode sheets 2, and the feeding roller set 14 may be simultaneously controlled to move in the second direction, so as to improve processing efficiency and single-machine production capacity.

According to the control method in the embodiments of the present application, the feeding roller set 14 is located at the standby station during winding, which does not affect winding work of the winding needle 12. In the finishing phase, the feeding roller set 14 is moved to the clamping station to adjust the spacing between two composite electrode sheets 2 by using the feeding roller set 14, so as to adjust a tab edge distance between a cathode and an anode after a cell is wound and formed, which has high adjustment efficiency and high accuracy, reduces deviation of a tab center distance of a composite winding cell, improves a yield rate, and speeds up project development progress.

According to some embodiments of the present application, before the step of controlling the feeding roller set 14 to clamp one composite electrode sheet 2, the control method further includes: controlling the alignment roller set 13 to separate the plurality of composite electrode sheets 2.

In this implementation, because two composite electrode sheets 2 are aligned during winding, in the finishing phase, the fourth drive mechanism needs to be first controlled to drive the first alignment roller 131 and/or the second alignment roller 132 to move in the direction away from each other to separate the two composite electrode sheets 2, so that the feeding roller set 14 clamps one composite electrode sheet 2.

Before the controlling the cutter assembly 15 to cut off the composite electrode sheets 2, the control method further includes: controlling the alignment roller set 13 to align the plurality of composite electrode sheets 2.

In this implementation, to facilitate the cutter assembly 15 to cut off the composite electrode sheets 2 and to enable a cutting position of the plurality of composite electrode sheets 2 to be accurate, before the cutter assembly 15 cuts off the composite electrode sheets 2, the fourth drive mechanism needs to be first controlled to drive the first alignment roller 131 and/or the second alignment roller 132 to move in the direction close to each other to align two composite electrode sheets 2, so that the cutter assembly 15 cuts off the plurality of composite electrode sheets 2.

It should be noted that, the alignment roller set 13 may be controlled to align the plurality of composite electrode sheets 2 while the cutter assembly 15 is controlled to move in the direction of the composite electrode sheets 2, so as to improve single-machine production capacity.

In the foregoing technical solution, the plurality of composite electrode sheets 2 are controlled to be separated, so that the feeding roller set 14 clamps a single composite electrode sheet 2, and the plurality of electrode sheets are aligned, so that the cutter assembly 15 cuts off the plurality of composite electrode sheets 2.

According to some embodiments of the present application, the step of controlling the feeding roller set 14 to move in the first direction to the clamping station includes:
controlling the feeding roller set 14 and the cutter assembly 15 to synchronously move in the first direction until the feeding roller set 14 is located at the clamping station and the cutter assembly 15 is located at the cutting station.

In this implementation, the feeding roller set 14 and the cutter assembly 15 are configured to be synchronously movable in the first direction, so that in the finishing phase, the feeding roller set 14 and the cutter assembly 15 synchronously move close to the support member 11 in the first direction, and in the case that the cutter assembly 15 is located at the cutting station, the feeding roller set 14 can be synchronously located at the clamping station, so as to avoid individually controlling the feeding roller set 14 and the cutter assembly 15 to move, reduce control working procedure, and improve production efficiency.

According to the embodiments of the present application, by synchronously moving the cutter assembly 15 and the feeding roller set 14, a drive mechanism and a control circuit can be reduced, assembly space of an apparatus can be optimized, and action efficiency can be improved.

According to some embodiments of the present application, before the controlling the feeding roller set 14 to move by a target distance in the second direction, the control method may further include:
obtaining a correction distance of a tab of one of the plurality of composite electrode sheets 2; and
determining the target distance based on the correction distance.

As shown in FIG. 6, in this implementation, the battery winding apparatus 1 is provided with a tab position sensor, position information of a tab of one of the plurality of composite electrode sheets 2 is obtained through the sensor. The correction distance is 0 when the position of the tab is detected to be correct, and the correction distance of the tab is determined when the position of the tab is detected to be incorrect. Each correction distance corresponds to one determined target distance, and the feeding roller set 14 is controlled to pull a corresponding composite electrode sheet 2 to move by the target distance, so that the position of the tab of the corresponding composite electrode sheet 2 is correct.

It should be noted that, when the position of the tab is detected to be correct, that is, when the correction distance is 0, there is also a corresponding target distance, that is, in the case that the position of the tab is correct, the feeding roller set 14 still needs to be controlled to move by the target distance in the second direction. An example description is made with reference to FIG. 6, and FIG. 6 shows a schematic diagram of the feeding roller set 14 moving by different target distances, where when the correction distance is 0, the feeding roller set 14 moves to point B. When the tab edge distance is detected to be too large, the correction distance is greater than 0, and the feeding roller set 14 moves to point A. When the tab edge distance is detected to be too small, the correction distance is less than 0, and the feeding roller set 14 moves to point C.

According to the embodiments of the present application, the movement distance of the feeding roller set 14 is determined by obtaining the correction distance of the tab, so that correction of the position of the tab is more accurate to improve product yield.

According to some embodiments of the present application, referring to FIG. 1 to FIG. 4, the present application provides a battery winding apparatus 1, and the battery winding apparatus 1 includes a support member 11, a main shaft 17, a winding needle 12, an alignment roller set 13, a bracket 16, a feeding roller set 14, a cutter assembly 15, a pin 18, a first drive mechanism, a second drive mechanism, a third drive mechanism, and a fourth drive mechanism.

The support member 11 may be a support plate, the support plate is disposed in the vertical direction, the main shaft 17 is installed on the support plate and extends in the first direction, the winding needle 12 is installed on the support plate and extends in the first direction, the winding needle 12 can rotate along its own axis and can revolve around the axis of the main shaft 17, and the winding needle 12 is used for winding the plurality of composite electrode sheets 2.

The alignment roller set 13 is disposed on an upper side of the main shaft 17, the alignment roller set 13 includes a first alignment roller 131 and a second alignment roller 132 that are distributed in the second direction, and the first alignment roller 131 and the second alignment roller 132 are respectively used for supporting two composite electrode sheets 2. The fourth drive mechanism is power-coupled to at least one of the first alignment roller 131 and the second alignment roller 132, and is used for driving one of the first alignment roller 131 and the second alignment roller 132 to move in the direction close to or away from each other.

The bracket 16 is movably installed on the support member 11 in the first direction, the feeding roller set 14 and the cutter assembly 15 are installed on the bracket 16, and the first drive mechanism is power-coupled to the bracket 16 and used for driving the bracket 16 to move in the first direction, so that the bracket 16 drives the feeding roller set 14 and the cutter assembly 15 to move from the standby station to the support member 11. In addition, in the case that the bracket 16 moves to a position close to the support member 11, the cutter assembly 15 is located at the cutting station, and the feeding roller set 14 is located at the clamping station.

The feeding roller set 14 includes two feeding rollers 141, and the third drive mechanism is power-coupled to at least one of the two feeding rollers 141 and used for driving the two feeding rollers 141 to move in the direction close to and away from each other. In the case that the two feeding rollers 141 are located at the standby station, the two feeding rollers 141 are separated in the direction away from each other, and in the case that the two feeding rollers 141 are located at the clamping station, the two feeding rollers 141 are located on two sides of the composite electrode sheet 2 on a side away from the main shaft 17, and the third drive mechanism is configured to drive the two feeding rollers 141 to move in the direction close to each other to clamp a corresponding composite electrode sheet 2 in the case that the feeding roller set 14 moves to the clamping station.

The feeding roller set 14 is slidably installed on the bracket 16 in the second direction, the bracket 16 is further provided with a second drive mechanism, and the second drive mechanism is used for driving the feeding roller set 14 to move away from the main shaft 17 in the second direction.

In the case that the cutter assembly 15 is located at the cutting station, the cutter assembly 15 can move in a direction close to the composite electrode sheets 2 and cut off the plurality of composite electrode sheets 2.

The second drive mechanism and the fourth drive mechanism are configured such that while the cutter assembly 15 is located at the cutting station and moves in the direction of cutting the composite electrode sheet 2, the second drive mechanism drives the feeding roller set 14 to move in the second direction, and the fourth drive mechanism drives the first feeding roller 141 and the second feeding roller 141 to separate. The third drive mechanism is configured to drive the two feeding rollers 141 to separate after the pin 18 clamps the plurality of composite electrode sheets 2.

The present application further discloses a battery production line, including: a feeding mechanism and a battery winding apparatus 1.

The feeding mechanism is used for conveying the composite electrode sheets to the battery winding apparatus 1; and the battery winding apparatus 1 is the battery winding apparatus 1 according to any of the foregoing embodiments.

In the battery production line of the present application, by designing the battery winding apparatus 1 with the foregoing structure, the feeding roller set 14 is located at the standby station during winding, which does not affect winding work of the winding needle 12. In the finishing phase, the feeding roller set 14 is moved to the clamping station to adjust the spacing between two composite electrode sheets 2 by using the feeding roller set 14, so as to adjust a tab edge distance between a cathode and an anode after a cell is wound and formed, which has high adjustment efficiency and high accuracy, reduces deviation of a tab center distance of a composite winding cell, improves a yield rate, and speeds up project development progress.

The battery production line may further include other mechanisms, including a composite mechanism for combining an electrode sheet and a separator, an encapsulation mechanism for encapsulating a battery, and the like.

It should be noted that, without contradictory, the embodiments in the present application may be combined with the features in the embodiments.

The above descriptions are merely preferred embodiments of the present application, and are not intended to limit the present application. For a person skilled in the art, various modifications and changes may be made to the present application. Any modification, equivalent replacement, or improvement made without departing from the spirit and principle of the present application shall fall within the protection scope of the present application.

## Claims

1. A battery winding apparatus, comprising:
a support member;
an alignment roller set, movably installed on the support member and used for aligning a plurality of composite electrode sheets;
a winding needle, rotatably installed on the support member, wherein the winding needle is used for winding the plurality of composite electrode sheets;
a feeding roller set, movably installed on the support member between a standby station and a clamping station in a first direction, wherein the feeding roller set is configured to, when located at the clamping station, clamp a blank separator of one composite electrode sheet between the winding needle and the alignment roller set and move in a second direction to adjust a distance between two composite electrode sheets; and
a cutter assembly, movably installed on the support member, wherein the cutter assembly is used for cutting off the composite electrode sheets.

2. The battery winding apparatus according to claim 1, wherein the cutter assembly is movably disposed between the standby station and a cutting station in the first direction, the feeding roller set and the cutter assembly are configured to synchronously move in the first direction, and in the case that the cutter assembly is located at the cutting station, the feeding roller set is located at the clamping station.

3. The battery winding apparatus according to claim 2, further comprising:
a bracket, movably disposed on the support member in the first direction, wherein the cutter assembly and the feeding roller set are installed on the bracket; and
a first drive mechanism, power-coupled to the bracket and used for driving the bracket to move in the first direction.

4. The battery winding apparatus according to claim 3, further comprising:
a second drive mechanism, wherein the feeding roller set is slidably connected to the bracket in the second direction, and the second drive mechanism is power-coupled to the feeding roller set and used for driving the feeding roller set to slide in the second direction.

5. The battery winding apparatus according to claim 4, wherein the second drive mechanism is configured to drive the feeding roller set to move in the second direction while the cutter assembly is located at the cutting station and moves in a direction of cutting the composite electrode sheets.

6. The battery winding apparatus according to any one of claims 1 to 5, wherein the feeding roller set comprises two feeding rollers; and
the battery winding apparatus further comprises a third drive mechanism, the third drive mechanism is power-coupled to at least one of the two feeding rollers, and is used for driving the at least one of the two feeding rollers to move in a direction close to or away from each other.

7. The battery winding apparatus according to any one of claims 1 to 6, wherein the alignment roller set comprises a first alignment roller and a second alignment roller; and
the battery winding apparatus further comprises a fourth drive mechanism, the fourth drive mechanism is power-coupled to at least one of the first alignment roller and the second alignment roller, and is used for driving the at least one of the first alignment roller and the second alignment roller to move in the direction close to or away from each other.

8. The battery winding apparatus according to any one of claims 1 to 7, wherein the fourth drive mechanism is configured to drive at least one of the first alignment roller and the second alignment roller to move in a direction away from each other before the feeding roller set moves from the standby station to the clamping station.

9. The battery winding apparatus according to any one of claims 1 to 8, further comprising:
a main shaft, installed on the support member, wherein the feeding roller set is used for clamping, when located at the clamping station, a blank separator of a composite electrode sheet located on a side away from the main shaft.

10. The battery winding apparatus according to claim 9, further comprising:
a pin, movably installed on the support member, wherein the pin is disposed between the main shaft and the alignment roller set, and the pin is configured to clamp the plurality of composite electrode sheets before the cutter assembly cuts the composite electrode sheets.

11. A battery production line, comprising:
the battery winding apparatus according to any one of claims 1 to 10; and
a feeding mechanism, used for conveying the composite electrode sheets to the battery winding apparatus.

12. A control method for a battery winding apparatus according to any one of claims 1 to 11, wherein the control method comprises:
in the case that the winding needle stops rotating, controlling the feeding roller set to move in the first direction to the clamping station, and controlling the feeding roller set to clamp a blank separator of one composite electrode sheet;
controlling the cutter assembly to move in the direction of cutting the composite electrode sheets, and controlling the feeding roller set to move by a target distance in the second direction to pull the clamped composite electrode sheet; and
controlling the cutter assembly to cut off the composite electrode sheets.

13. The control method for a battery winding apparatus according to claim 12, wherein before the controlling the feeding roller set to clamp one composite electrode sheet, the control method further comprises:
controlling the alignment roller set to separate the plurality of composite electrode sheets;
and
before the controlling the cutter assembly to cut off the composite electrode sheets, the control method further comprises:
controlling the alignment roller set to align the plurality of composite electrode sheets.

14. The control method for a battery winding apparatus according to claim 12 or 13, wherein the controlling the feeding roller set to move in the first direction to the clamping station comprises:
controlling the feeding roller set and the cutter assembly to synchronously move in the first direction until the feeding roller set is located at the clamping station and the cutter assembly is located at the cutting station.

15. The control method for a battery winding apparatus according to any one of claims 12 to 14, wherein before the controlling the feeding roller set to move by a target distance in the second direction, the control method further comprises:
obtaining a correction distance of a tab of one of the plurality of composite electrode sheets;
and
determining the target distance based on the correction distance.
